# EUROPEAN PATENT SPECIFICATION

(11) **EP 1 281 609 B1**
(45) Date of publication and mention of the grant of the patent: **12.09.2007**
(21) Application number: 02016270.7
(22) Date of filing: 23.07.2002
(51) Int. Cl.: B62M 3/00, B62K 19/16

(54) **Process for the production of a crank lever for a bicycle and crank lever for a bicycle**
Verfahren zur Herstellung von einem Kurbelhebel eines Fahrrads und Kurbelhebel für ein Fahrrad
Procédé de production d'un levier de manivelle pour une bicyclette et levier de manivelle pour une bicyclette

(30) Priority: 03.08.2001 IT TO20010782
(43) Date of publication of application: 05.02.2003
(73) Proprietor: CAMPAGNOLO S.R.L., I-36100 Vicenza (IT)
(72) Inventor: Dal Pra', Giuseppe, 36010 Zané (Vicenza) (IT)
(74) Representative: Checcacci, Giorgio

(56) References cited:
- EP-A- 0 916 477
- DE-A- 19 755 950
- FR-A- 2 636 386
- US-A- 5 435 869
- US-B1- 6 195 894

## Description

The present invention relates to a process for the production of a crank lever for a bicycle and to a crank lever for a bicycle.

Recently, crank levers have been proposed which are provided with two inserts made of metal material (an aluminium alloy or the like) which are set at the ends of the crank-lever body and are enclosed in a shell of composite material formed by a high-strength-fibre (typically, carbon fibre) fabric enclosed in a matrix of thermosetting plastic material. The process currently adopted for producing crank levers of the above type envisages the use of a pre-formed structure including the two inserts and a central filling core. On the said pre-formed structure there are wound layers made of carbon-fibre fabric embedded in a matrix of plastic material. Finally, the ensemble thus obtained is subjected to a thermosetting step in a mould.

This known process is laborious and difficult to automate, above all as regards the step of wrapping the inserts and filling core with layers of fibre-reinforced plastic material.

EP-A-09164 77 discloses a method for making a crank lever comprising the step of inserting a structure with fibres included in a thermosetting or thermoplastic matrix into a mould. Inserts are used as part of the mould to form cavities in the crank lever during moulding.

The object of the present invention is to provide a process for producing crank levers for bicycles of the type specified above that is simpler and is more easily automatable.

According to the present invention, the above object is achieved by a process and by a crank lever having the characteristics that form the subject of the attached claims.

The present invention will now be described in detail with reference to the attached drawings, which are provided purely by way of non-limiting example and in which:
- Figures 1 and 2 are schematic illustrations of two operating steps of a first embodiment of a process according to the present invention;
- Figure 3 is a perspective view illustrating the crank lever that is obtained at the end of the process illustrated in Figures 1 and 2;
- Figures 4 and 5 are schematic illustrations of a second embodiment of a process according to the present invention;
- Figures 6 to 9 are schematic sectional views of the moulding equipment, illustrating the various modes of implementation of the step of moulding the fibre-reinforced thermosetting material;
- Figure 7A is a schematic longitudinal section of the equipment illustrated in Figures 6 and 7;
- Figures 10, 11 and 12 are schematic axial sections illustrating different types of crank levers that can be made using the process according to the invention;
- Figures 13 and 14 are schematic views illustrating the equipment for the production of a crank lever with arms for fixing the chain rings; and
- Figures 15 and 16 are plan views of two crank levers with arms for fixing the chain rings that can be obtained with the process according to the invention.

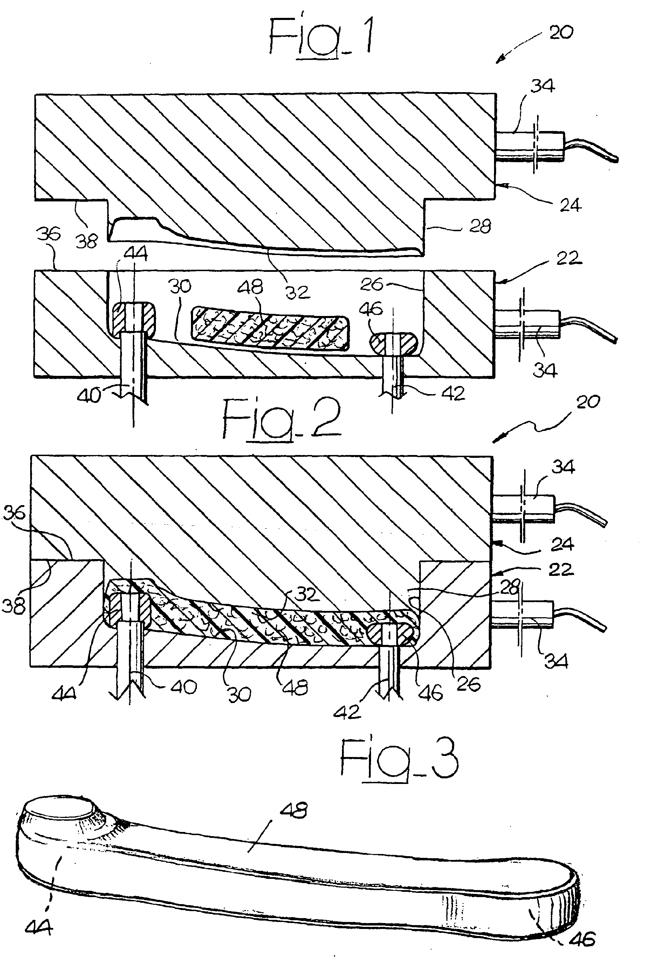

With reference to Figures 1 and 2, number 20 designates moulding equipment including two half-moulds 22, 24, which are mobile with respect to one another between the open position illustrated in Figure 1 and the closed position illustrated in Figure 2. The half-mould 22 has a cavity 26 which is designed to receive a moulding portion 28 of the second half-mould 24. The cavity 26 and the moulding portion 28 have respective moulding surfaces 30, 32. The two half-moulds 22, 24 are made of metal material and are provided with heating means, designated as a whole by 34, preferably consisting of resistance-heating elements. The two half-moulds 22, 24 can be provided with respective mutually co-operating arrest surfaces 36, 38 which define the end-of-travel position of the half-moulds 22, 24, which corresponds to the closed position of Figure 2. The first half-mould 22 is provided with a pair of extractor elements 40, 42 which move in the direction of their own axis for extraction of the finished crank lever at the end of the moulding process.

The process for the production of a crank lever for a bicycle according to the present invention envisages providing a pair of metal inserts 44, 46 in a pre-set position in the cavity 26 of the first half-mould 22. Preferably, the inserts 44, 46 are mounted on the ends of the extractor elements 40, 42. A pre-set amount of fibre-reinforced mouldable material is set in the cavity 26. The material 48 is in the plastic state so that it can slide under the action of a moulding pressure so as to fill completely the moulding cavity defined between the moulding surfaces 30, 32 in the closed configuration of the two half-moulds 22, 24. The material 48 preferably consists of carbon fibres embedded in a thermosetting plastic matrix, but it can be selected among carbon fibres, glass fibres, aramidic fibres, boron fibres, ceramic fibres or any combinations thereof.
When the half-moulds 22, 24 are closed, the moulding surfaces 30, 32 exert, on the material 48 in the plastic state, a pressure which causes the plastic material to slide into the moulding seat. As it is illustrated in Figure 2, the material 48 completely fills the moulding seat defined between the moulding surfaces 30, 32. Again as may be seen in Figure 2, the material 48 in the closed position of the half-moulds 22, 24 covers almost entirely the inserts 44, 46, except for the portions of the latter in contact with the bottom wall 30 of the cavity 26. During the moulding step, the half-moulds 22, 24 are heated by means of the heating elements 34 up to a temperature equal to or higher than the thermosetting temperature of the material 48. The moulding equipment 20 remains in the closed position for a time sufficient to transfer, to the material 48, the amount of heat necessary for bringing the material itself up to the thermosetting temperature. Next, the half-moulds 22, 24 are opened, and the finished crank lever having the shape illustrated in Figure 3 is extracted. The inserts 44, 46 are embedded in a high-strength rigid body formed by fibres enclosed in a hardened plastic matrix.

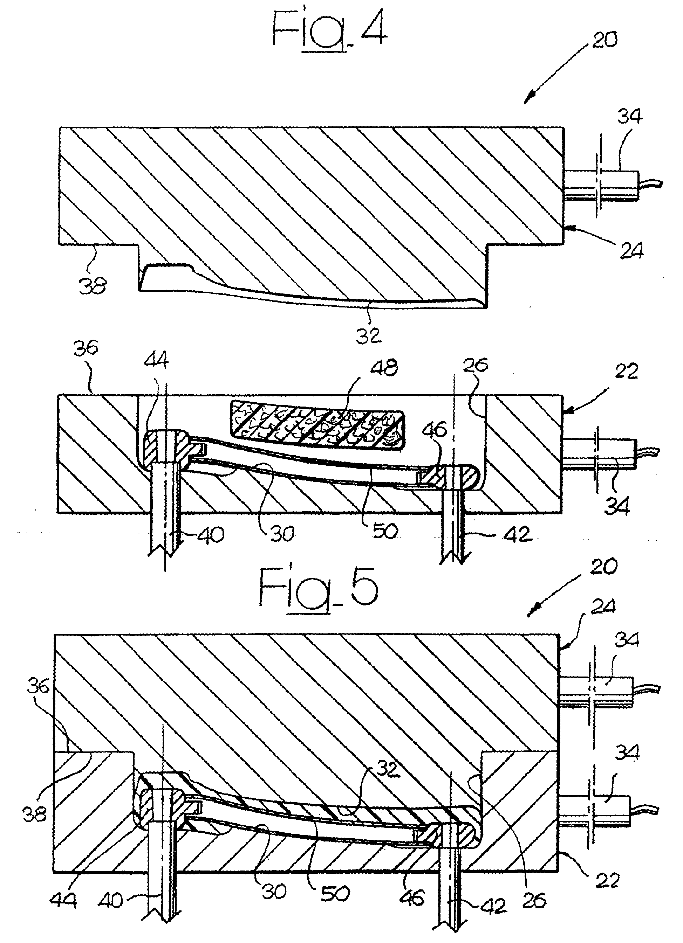

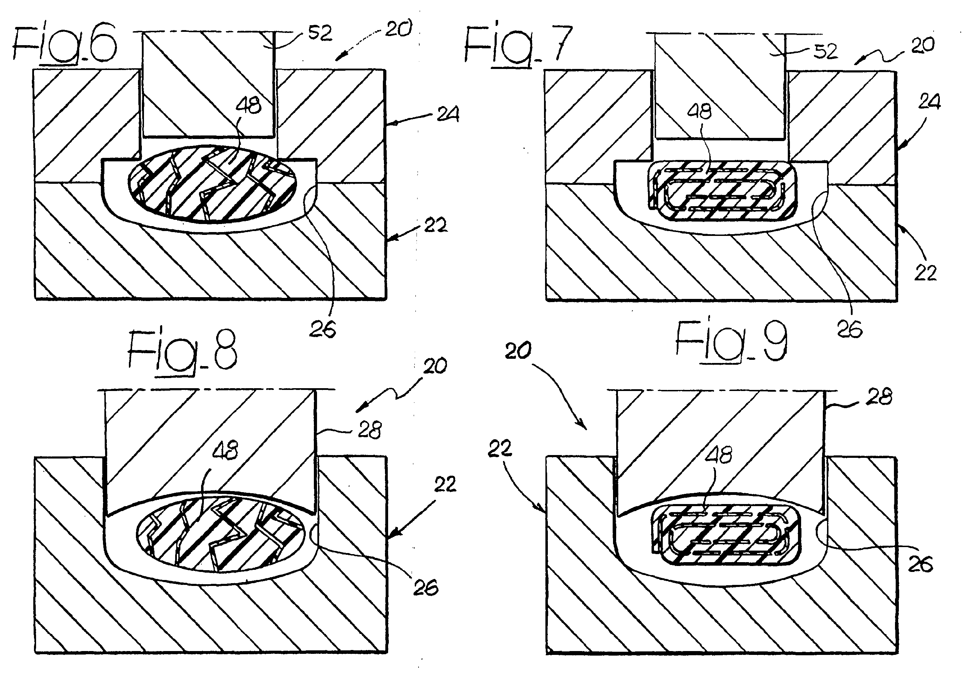

Figures 4 and 5 illustrate a variant of the process according to the present invention. The items corresponding to the ones previously described are designated by the same reference numbers. The moulding process is practically identical to the one previously illustrated. The only difference lies in the fact that a tubular element 50 is set in the cavity 26, the said tubular element 50 being at least partially coated by the fibre-reinforced plastic material 48 during the moulding operation. In this way it is possible to reduce further the weight of the finished crank lever since the central part of the crank lever is hollow. The tubular element 50 may be made of a light alloy, or else of a fibre-reinforced plastic matrix.

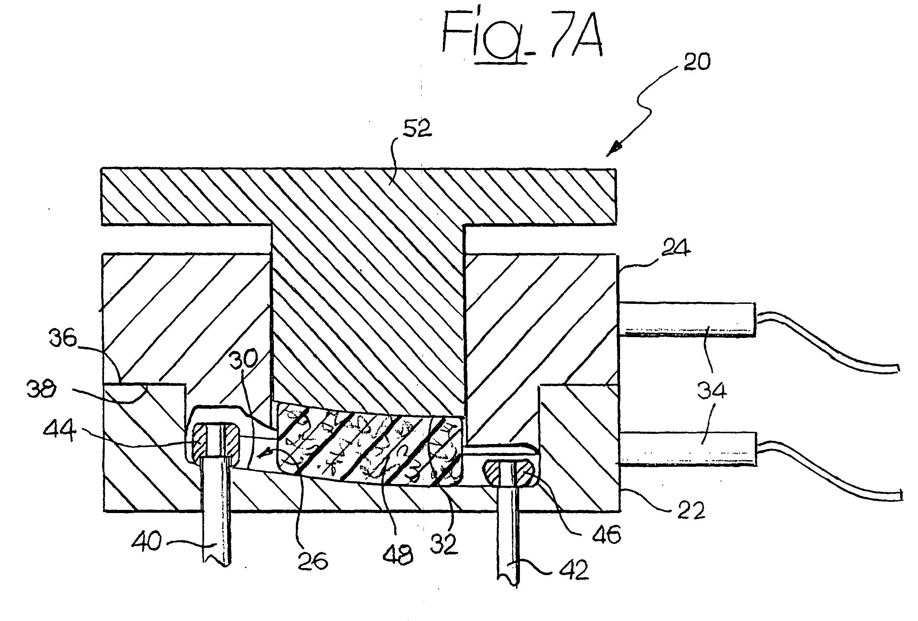

Figures 6 to 9 are schematic illustrations of a number of variants of the moulding equipment that may be used in a process according to the present invention. In Figures 6, 7 and 7A the half-moulds 22, 24 define, in the closed position, a moulding seat 26 with undercut cross section. A slider 52 is used to apply the moulding pressure on the material 48. In the version of Figure 6, the material 48 consists of a mass in which the reinforcement fibres are set at random in the matrix of thermosetting material. In the variant of Figure 7, the reinforcement fibres are, instead, arranged in an orderly way. For example, the material 48 may consist of a ribbon in which the fibres extend in the longitudinal direction, and the said ribbon is wound onto itself before being set inside the moulding equipment, in such a way that the reinforcement fibres are set according to a general spiral configuration. In the variants illustrated in Figures 8 and 9, the first half-mould 22 has, in its transverse cross-sectional view, a U-shaped moulding seat inside which the moulding portion 28 of the second half-mould is slidably mounted. In a way similar to what was described previously, in the variant of Figure 8 the reinforcement fibres are set at random inside the mass of plastic material, whereas in the variant of Figure 9 the fibres are arranged in an orderly way, for example according to a spiral configuration.

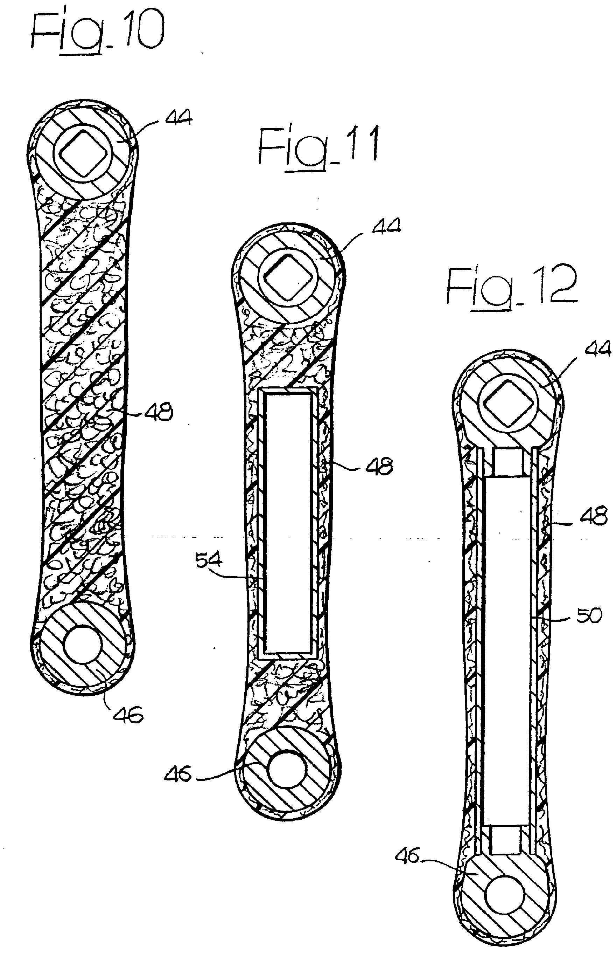

Figures 10, 11 and 12 are schematic longitudinal sectional views of three different crank levers that may be produced with the process according to the present invention. In the case of Figure 10, the body of the crank lever is made entirely of fibre-reinforced plastic material, embedded in which are the two inserts 44, 46 made of light alloy, which are designed to be respectively fixed to the crank pin and to one pedal. In the variant of Figure 11, inside the body of the crank lever there is embedded a hollow element 54, the ends of which are set at a distance from the inserts 44, 46, whereas in the further variant of Figure 12 a crank lever is illustrated, embedded in which is a tubular element 50, the ends of which establish a shape fit with the inserts 44, 46. The said crank lever is obtained by means of the process schematically illustrated in Figures 4 and 5.

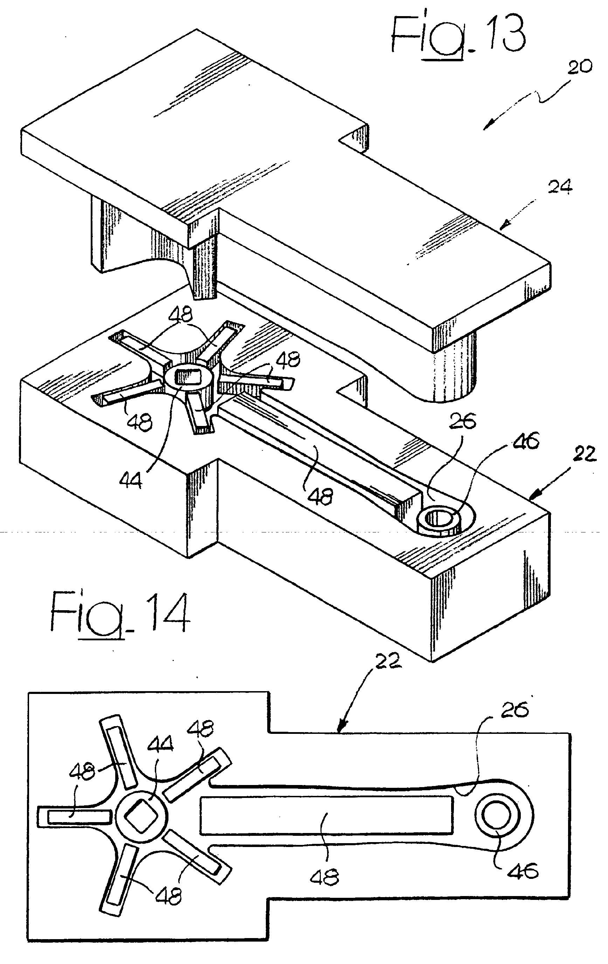

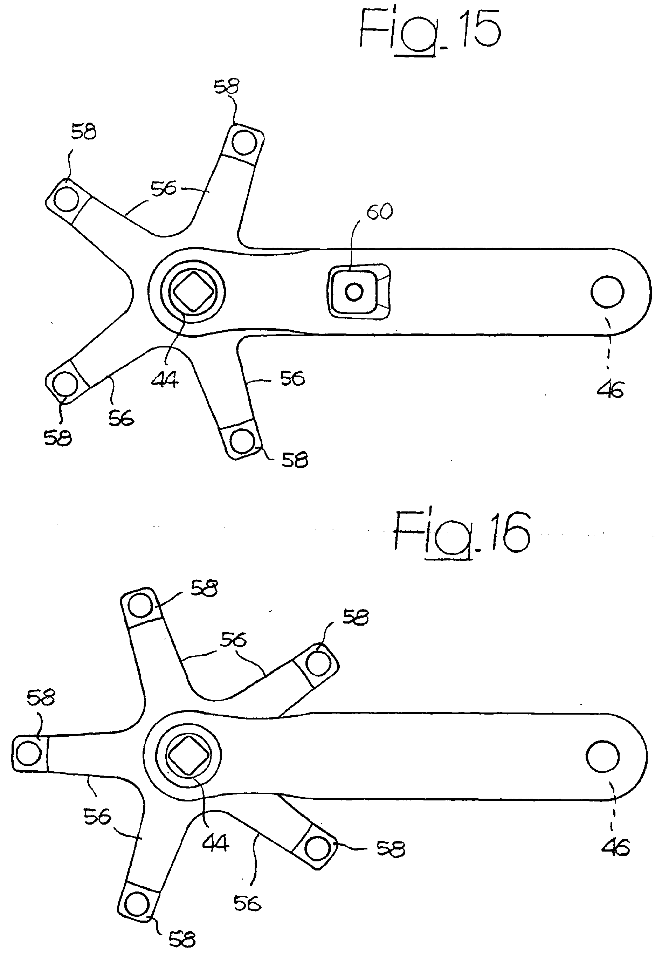

Figures 13 and 14 are schematic illustrations of moulding equipment for the production of a right-hand crank lever provided with integral arms for fixing the chain rings. From a conceptual standpoint, the equipment 20 is identical to the equipment previously described. The only difference lies in the different shape of the moulding seat 26, which has cavities designed to form the arms which extend in a radial direction form the area containing the insert 44 designed to be fixed to the crank pin. The fibre-reinforced material may be set both in the gap between the two inserts 44, 46 and inside each of the cavities that are to form the arms. The material 48 set in a position corresponding to the cavities that are to form the arms may be joined to or separate from the material that is to form the body of the crank lever.

Figures 15 and 16 are schematic plan views of two right-hand crank levers that may be obtained by means of the process according to the invention. In the variant of Figure 15, the crank lever has four arms 56 provided, at their respective ends, with portions for fixing the chain rings. A fifth fixing point for fixing the chain rings is formed by a third metal insert 60 embedded in the crank-lever body. In the variant of Figure 16 the crank lever is instead provided with five arms 56, and the insert 60 is not present.

Of course, without prejudice to the principle of the invention, the details of construction and the embodiments may vary widely with respect to what is described and illustrated herein purely by way of example, without thereby departing from the scope of the present invention as defined in the attached claims.

## Claims

1. A process for the production of a crank lever for a bicycle, comprising the steps of:
- providing a moulding equipment (20), including two half-moulds (22, 24) at least one of which is movable, and presenting an open position and a closed position, the equipment (20) in the closed position defining a moulding cavity (26) having a shape corresponding to that of the crank lever to be produced;
- providing, inside said moulding cavity (26), at least one insert (44, 46);
- introducing into the moulding equipment (20) in the open position a pre-set quantity of fibre-reinforced thermosetting material (48) in a plastic state;
- closing the moulding equipment (20) and applying to the aforesaid thermosetting material (48) a pressure via the surfaces (30, 32) of said moulding cavity (26) so as to cause the material (48) in the plastic state to flow into said moulding cavity (26), fill the moulding cavity (26) and cover at least partially the aforesaid at least one insert (44, 46); and
- heating the aforesaid thermosetting material (48) up to a thermosetting temperature
thereby embedding the at least one insert (44, 46) in the thermosetting material.

2. The process according to Claim 1, comprising the step of providing, inside said moulding cavity (26), a tubular element (50, 54) and covering at least in part said tubular element with said plastic material (48) during the step of closing the moulding equipment (20).

3. The process according to Claim 1, wherein the aforesaid fibres are arranged in a random way inside the aforesaid material (48).

4. The process according to Claim 1, wherein the aforesaid reinforcement fibres are arranged in an orderly way inside the aforesaid material (48).

5. The process according to Claim 4, wherein the aforesaid reinforcement fibres are arranged according to a general spiral configuration.

6. The process according to Claim 2, wherein the aforesaid tubular element (50, 54) establishes a shape fit with the aforesaid at least one insert (44, 46).

7. The process according to Claim 2, wherein the aforesaid tubular element (54) has its own ends set at a distance from the aforesaid inserts (44, 46).

8. The process according to Claim 1, comprising the step of providing fibre-reinforced mouldable thermosetting material (48) in portions of the aforesaid moulding cavity (26) which extend in a radial direction with respect to one of the ends of the crank lever so as to form radial arms (56) for fixing of the chain rings of a gear change.

9. The process according to Claim 8, comprising the step of introducing into the moulding cavity a further insert (60) designed to form a further fixing point for the aforesaid chain rings of the gear change.

10. Crank lever for a bicycle, comprising a body formed by a hardened plastic matrix of thermosetting material (48) having reinforcing fibres enclosed therein, **characterized in that** at least one insert (44, 46) is embedded in the hardened plastic matrix of thermosetting material (48).

11. Crank lever according to claim 10, wherein said body has a hollow cross-section.

12. Crank lever according to claim 10, wherein said body has a solid cross-section.

13. Crank lever according to claim 10, wherein said reinforcing fibres are chosen among carbon fibres, glass fibres, aramidic fibres, boron fibres, ceramic fibres or any combinations thereof.

14. Crank lever according to claim 10, wherein the fibres are set at random in the thermosetting material.

15. Crank lever according to claim 10, wherein the fibres are arranged in an orderly way in the thermosetting material.

16. Crank lever according to claim 11, including an hollow element (54) the ends of which are set at a distance from the inserts (44, 46).

17. Crank lever according to claim 11, including an hollow tubular element (50) the ends of which establish a shape fit with the inserts (44, 46).

## Patentansprüche

1. Verfahren zur Herstellung einer Tretkurbel für ein Fahrrad, das die folgenden Schritte umfasst:
Bereitstellen einer Formeinrichtung (20), die zwei Formhälften (22, 24) enthält, von denen wenigstens eine bewegt werden kann, und die eine offene sowie eine geschlossene Position aufweist, wobei die Einrichtung (20) in der geschlossenen Position einen Formhohlraum (26) mit einer Form bildet, die der der herzustellenden Tretkurbel entspricht;
Bereitstellen wenigstens eines Einsatzes (44, 46) im Inneren des Formhohlraums (26);
Einleiten einer vorgegebenen Menge an faserverstärktern wärmehärtbarem Material (48) in einem plastischem Zustand in die Formeinrichtung (20) in der offenen Position;
Schließen der Formeinrichtung (20) und Ausüben eines Drucks auf das wärmehärtbare Material (48) über die Oberflächen (30, 32) des Formhohlraums (26) um zu bewirken, dass das Material (48) in dem plastischen Zustand in den Formhohlraum (26) fließt, den Formhohlraum (26) füllt und den wenigstens einen Einsatz (44, 46) wenigstens teilweise bedeckt; und
Erhitzen des wärmehärtbaren Materials (48) bis auf eine Wärmehärtetemperatur,
um so den wenigstens einen Einsatz (44, 46) in das wärmehärtbare Material einzubetten.

2. Verfahren nach Anspruch 1, das den Schritt des Bereitstellens eines röhrenförmigen Elementes (50, 54) im Inneren des Formhohlraums (26) und des wenigstens teilweisen Bedeckens des röhrenförmigen Elementes mit dem plastischen Material (48) während des Schrittes des Schließens der Formeinrichtung (20) umfasst.

3. Verfahren nach Anspruch 1, wobei die Fasern willkürlich im Inneren des Materials (48) angeordnet werden.

4. Verfahren nach Anspruch 1, wobei die Fasern geordnet im Inneren des Materials (48) angeordnet werden.

5. Verfahren nach Anspruch 4, wobei die Verstärkungsfasern entsprechend einer allgemeinen Spiralform angeordnet werden.

6. Verfahren nach Anspruch 2, wobei das röhrenförmige Element (50, 54) eine Formpassung mit dem wenigstens einen Einsatz (44, 46) bildet.

7. Verfahren nach Anspruch 2, wobei die Enden des röhrenförmigen Elementes (54) in einem Abstand zu den Einsätzen (44, 46) angeordnet werden.

8. Verfahren nach Anspruch 1, das den Schritt des Bereitstellens von faserverstärktem formbarem wärmehärtbarem Material (48) in Abschnitten des Formhohlraums (26) umfasst, die sich in einer radialen Richtung in Bezug auf eines der Enden der Tretkurbelhebel so erstrecken, dass radiale Arme (56) zum Befestigen der Kettenblätter einer Gangschaltung gebildet werden.

9. Verfahren nach Anspruch 8, das den Schritt des Einführens eines weiteren Einsatzes (60) in den Formhohlraum umfasst, der dazu dient, einen weiteren Befestigungspunkt für die Kettenblätter der Gangsschaltung zu bilden.

10. Tretkurbel für ein Fahrrad, die einen Körper umfasst, der aus einer gehärteten Kunststoffmatrix aus wärmehärtbarem Material (48) besteht, in der verstärkende Fasern eingeschlossen sind, **dadurch gekennzeichnet, dass** wenigstens ein Einsatz (44, 46) in der gehärteten Kunststoffmatrix aus wärmehärtbarem Material (48) eingebettet ist.

11. Tretkurbel nach Anspruch 10, wobei der Körper einen hohlen Querschnitt hat.

12. Tretkurbel nach Anspruch 10, wobei der Körper einen massiven Querschnitt hat.

13. Tretkurbel nach Anspruch 10, wobei die verstärkenden Fasern aus Kohlefasern, Glasfasern, Aramidfasern, Borfasern, keramischen Fasern oder beliebigen Kombinationen daraus ausgewählt werden.

14. Tretkurbel nach Anspruch 10, wobei die Fasern willkürlich in dem wärmehärtbaren Material angeordnet sind.

15. Tretkurbel nach Anspruch 10, wobei die Fasern geordnet in dem wärmehärtbaren Material angeordnet sind.

16. Tretkurbel nach Anspruch 11, die ein hohles Element (54) enthält, dessen Enden in einem Abstand zu den Einsätzen (44, 46) angeordnet sind.

17. Tretkurbel nach Anspruch 1, die ein hohles röhrenförmiges Element (50) enthält, dessen Enden eine Formpassung mit den Einsätzen (44, 46) bilden.

## Revendications

1. Procédé de production d'un levier de manivelle pour une bicyclette, comprenant les étapes consistant à :
- fournir un équipement de moulage (20), comprenant deux demi-moules (22, 24), dont l'un d'entre eux est amovible, et présentant une position ouverte et une position fermée, l'équipement (20) en position fermée définissant une cavité de moulage (26) ayant une forme correspondant à celle du levier de manivelle à produire ;
- fournir, à l'intérieur de ladite cavité de moulage (26), au moins une insertion (44, 46) ;
- introduire dans l'équipement de moulage (20) en position ouverte une quantité prédéfinie d'un matériau thermodurcissable renforcé par des fibres (48) à l'état plastique ;
- fermer l'équipement de moulage (20) et appliquer au matériau thermodurcissable (48) susmentionné une pression par l'intermédiaire des surfaces (30, 32) de ladite cavité de moulage (26) afin d'entraîner l'écoulement du matériau (48) à l'état plastique dans ladite cavité de moulage (26), remplir la cavité de moulage (26) et recouvrir au moins partiellement au moins une des insertions (44, 46) susmentionnées ; et
- chauffer le matériau thermodurcissable (48) susmentionné jusqu'à une température de thermodurcissement,
encastrant de ce fait une ou plusieurs desdites insertions (44, 46) dans le matériau thermodurcissable.

2. Procédé selon la revendication 1, comprenant l'étape consistant à fournir, à l'intérieur de ladite cavité de moulage (26), un élément tubulaire (50, 54) et recouvrir au moins partiellement ledit élément tubulaire avec ledit matériau plastique (48) lors de l'étape consistant à fermer l'équipement de moulage (20).

3. Procédé selon la revendication 1, selon lequel les fibres susmentionnées sont disposées de manière aléatoire à l'intérieur du matériau (48) susmentionné.

4. Procédé selon la revendication 1, selon lequel les fibres de renfort susmentionnées sont disposées de manière ordonnée à l'intérieur du matériau (48) susmentionné.

5. Procédé selon la revendication 4, selon lequel les fibres de renfort susmentionnées sont disposées selon une configuration générale en spirale.

6. Procédé selon la revendication 2, selon lequel l'élément tubulaire (50, 54) susmentionné établit un ajustement de forme avec au moins une insertion (44, 46) susmentionnée.

7. Procédé selon la revendication 2, selon lequel l'élément tubulaire (54) susmentionné a ses propres extrémités établies à une certaine distance des insertions (44, 46) susmentionnées.

8. Procédé selon la revendication 1, comprenant l'étape consistant à fournir un matériau thermodurcissable (48) pouvant être moulé renforcé par des fibres dans les parties de la cavité de moulage (26) susmentionnée qui se prolongent dans une direction radiale par rapport à une des extrémités du levier de manivelle afin de former des bras radiaux (56) destinés à fixer les plateaux d'un changement de vitesse.

9. Procédé selon la revendication 8, comprenant l'étape consistant à introduire dans la cavité de moulage une autre insertion (60) conçue pour former un nouveau point de fixation pour les plateaux susmentionnés du changement de vitesse.

10. Levier de manivelle pour une bicyclette, comprenant un corps formé par une matrice de plastique durci d'un matériau thermodurcissable (48) ayant des fibres de renfort comprises dans celui-ci, **caractérisé en ce qu'**au moins une insertion (44, 46) est encastrée dans la matrice de plastique durci du matériau thermodurcissable (48).

11. Levier de manivelle selon la revendication 10, dans lequel ledit corps présente une section transversale creuse.

12. Levier de manivelle selon la revendication 10, dans lequel ledit corps présente une section transversale pleine.

13. Levier de manivelle selon la revendication 10, dans lequel lesdites fibres de renforcement sont choisies parmi des fibres de carbone, des fibres de verre, des fibres aramidiques, des fibres de bore, des fibres céramiques ou toutes combinaisons de celles-ci.

14. Levier de manivelle selon la revendication 10, dans lequel les fibres sont disposées de manière aléatoire à l'intérieur du matériau thermodurcissable.

15. Levier de manivelle selon la revendication 10, dans lequel les fibres sont disposées de manière ordonnée à l'intérieur du matériau thermodurcissable.

16. Levier de manivelle selon la revendication 11, comprenant un élément creux (54) dont les extrémités sont établies à une certaine distance des insertions (44, 46).

17. Levier de manivelle selon la revendication 11, comprenant un élément tubulaire creux (50) dont les extrémités établissent un ajustement de forme avec les insertions (44, 46).
